Europäisches Patentamt

European Patent Office

Office européen des brevets

(19)

(11) **EP 1 071 928 B1**

(12) **EUROPÄISCHE PATENTSCHRIFT**

| | |
|---|---|
| (45) Veröffentlichungstag und Bekanntmachung des Hinweises auf die Patenterteilung:<br>**02.10.2002 Patentblatt 2002/40** | (51) Int Cl.⁷: **G01D 5/20**, G01B 7/30,<br>G01B 7/00 |
| (21) Anmeldenummer: **99942627.3** | (86) Internationale Anmeldenummer:<br>**PCT/DE99/01135** |
| (22) Anmeldetag: **15.04.1999** | (87) Internationale Veröffentlichungsnummer:<br>**WO 99/054686 (28.10.1999 Gazette 1999/43)** |

(54) **ANTENNEN-TRANSPONDER-ANORDNUNG ZUR ENERGIEÜBERTRAGUNG UND WINKELMESSUNG**

ANTENNA-TRANSPONDER ARRANGEMENT FOR TRANSPORTING ENERGY AND MEASURING ANGLES

ENSEMBLE ANTENNE-TRANSPONDEUR POUR LE TRANSPORT D'ENERGIE ET LA MESURE D'ANGLES

| | |
|---|---|
| (84) Benannte Vertragsstaaten:<br>**DE** | (73) Patentinhaber: **SIEMENS AKTIENGESELLSCHAFT**<br>**80333 München (DE)** |
| (30) Priorität: **16.04.1998 DE 19816936** | (72) Erfinder: **GLEHR, Manfred**<br>**D-93073 Neutraubling (DE)** |
| (43) Veröffentlichungstag der Anmeldung:<br>**31.01.2001 Patentblatt 2001/05** | (56) Entgegenhaltungen:<br>**WO-A-95/31696      DE-A- 3 642 607** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Antennen-Transponder-Anordnung zur Winkelmessung sowie die Drehmomentmessung, die Datenübertragung zur Winkelpositionsbestimmung, die Signalaufbereitung und die Winkelmessung mit einem rotierenden Geber bei einer derartigen Anordnung.

Zur Winkel- und Positionsmessung einer rotierenden Welle ist aus der EP 0 611 952 A1 eine Vorrichtung bekannt, bei der auf einem eine rotierende Welle umgebenden Ring eine Sequenz von verschiedenen Permanentmagneten vorgesehen ist. Die Sequenz ist codiert, so daß aus der Abfolge der magnetischen Polungen auf die Position der Welle geschlossen werden kann. Zur Detektion der Wellenposition ist ein stationärer Winkelsensor vorgesehen, der durch Wechselwirkung mit den Permanentmagneten eine Signalfolge erzeugt, aus der auf die Wellenposition geschlossen werden kann. Die Vorrichtung weist den Nachteil auf, daß Permanentmagnete auf einer Welle vorgesehen werden müssen, die durch externe starke Magnetfelder ihre Polung ändern können. Darüber hinaus erfordert der Ring eine gewisse räumliche Ausdehnung, um die verschiedenen Einzelmagnete vorzusehen. Ferner besteht nicht die Möglichkeit, vom Winkelsensor auf die Welle Energie zu übertragen, um dort weitere Meßsensoren, z. B. zur Drehmomentmessung zu speisen.

Aus der Druckschrift WO 95/31696 ist ein lineares Positionserkennungssystem beschrieben, das eine statio-näre Antenneneinrichtung mit einem Paar spiralförmiger Spulen und einer Anregungsspule aufweist. Dabei hebt sich der mittlere Fluß der beiden spiralförmigen Spulen gegenseitig auf. Mit Hilfe eines Schwingkreises mit Resonanzverhalten werden in den spiralförmigen Spulen Ströme induziert, deren Amplitude ein Maß für die Position des Schwingkreises darstellt.

Des weiteren sind Antennen-Transponder-Anordnungen bekannt, bei denen Energie von einer stationären Antenne zu einem rotierenden Transponder übertragen wird und durch eine mäanderförmige Ausbildung wenigstens einer Teilspule der stationären Antenne eine Positionsmessung des Transponders möglich ist. Derartige Anordnungen sehen eine mäanderförmige Antenne zur Erfassung der Winkelposition vor. Durch die große von der stationären Spule umschlossene Fläche ist die elektromagnetische Kopplung gegenüber der Umgebung sehr groß. Dies hat einen hohen Energieaufwand zur Erzeugung einer gewünschten Magnetfeldintensität zur Folge. Des weiteren ist die Störabstrahlung in die Umgebung groß, und letztlich ist die Störempfindlichkeit gegenüber Einstrahlung in den Primärkreis groß.

Der Erfindung liegt die Aufgabe zugrunde, eine Antennen-Transponder-Anordnung der gattungsgemäßen Art so auszugestalten, daß eine möglichst störungsunempfindliche und genaue Positionsbestimmung eines rotierenden Transponders relativ zu einer stationären Antenneneinrichtung möglich ist.

Diese Aufgabe wird erfindungsgemäß durch eine eine Antennen-Transponder-Anordnung mit den Merkmalen des Anspruches 1 gelöst.

Es werden im Stator (stationäre Antenneneinrichtung) mindestens zwei Spulen verwendet, die entlang einem vorgegebenen Radius, der auch der Drehradius des Rotors (mit Transponder) ist, zu wechselnden magnetischen Flüßen führen. Dabei werden die Spulen der stationären Antenneneinrichtung so ausgeführt und mit Strom der eingezeichneten Polarität versehen, daß sich das in der innersten, allen Spulen gemeinsamen Fläche resultierende Feld weitgehend aufhebt. Die Ausführung kann so gestaltet sein, daß die eine Spule als Mäanderspule und die andere glatt, daß zwei glatte und eine Mäanderspule oder daß zwei Mäanderspulen ausgeführt werden. Dadurch werden die Induktivität, die Störeinstrahlung sowie die Abstrahlung der Anordnung herabgesetzt. Betrachten wir die Antennenspulen als die Primärseite eines Transformators mit großem Luftspalt, und die Spulen des Rotors als die Sekundärseite eines Transformators, so ist der Kopplungsgrad in erster Näherung proportional zu den sich überdeckenden Flächen. Erwünscht wäre ein Kopplungsgrad von 1, der nie erreicht werden kann. Durch die Verringerung der magnetisch wirksamen Fläche der Primärspulenanordnung wird bei gegebener gleichbleibender Fläche der Sekundärspule der Kopplungsgrad wesentlich erhöht.

Ein weiteres Problem bei derartigen Anordnungen ist die starke Abnahme des Kopplungsgrades mit steigendem Luftspalt, wobei dann die induzierte Spannung der Sekundärseite ebenso stark abnimmt. Für eine genaue Positionsbestimmung ist dies eine schlechte Voraussetzung. Um diese Erscheinung zu verbessern, wird die Positionsmessung auf eine Verhältnismessung zurückgeführt. Dies geschieht dadurch, daß die Spannung $U_1$, die die Position re-präsentiert, verglichen wird mit der Vergleichsspannung $U_2$, wobei beide Spannungen in gleichem Maß zum Luftspalt proportional sind.

Vorteilhafte Weiterbildungen des erfindungsgemäßen Gegenstands ergeben sich aus den Unteransprüchen.

Weitere Merkmale, Einzelheiten und Vorteile der Erfindung ergeben sich aus der nachfolgenden Beschreibung, in der Ausführungsbeispiele des Erfindungsgegenstandes anhand der Zeichnungen näher erläutert sind. Es zeigt:

Fig. 1     einen Querschnitt einer erfindungsgemäßen Antennen-Transponder-Anordnung,

Fig. 2     eine Draufsicht auf eine Antennen-Transponder-Anordnung gemäß Fig. 1,

Fig. 3     eine Teilansicht des Transponders mit einem feldführendem Ferrit,

Fig. 4  einen Ausschnitt der Anordnung gemäß Fig. 1 mit einer Antenneneinrichtung auf einer Platte, die um eine Welle angeordnet ist,

Fig. 5  eine Anordnung gemäß Fig. 1 im Querschnitt,

Fig. 6  eine Antennenanordnung gemäß Fig. 1 mit einer Mäanderspule und einer glatten Spule,

Fig. 7  einen Ausschnitt einer Auswerteschaltung für eine Anordnung gemäß Fig. 1,

Fig. 8  das zeitliche Verhalten der induzierten Spannung $U_1$ für verschiedene Luftspaltenbreiten,

Fig. 9  Antennen-Transponder-Anordnung mit seinem Ersatzschaltbild für eine Anordnung gemäß zur passiven Drehmomentmessung,

Fig. 10  ein Schaltbild eines Gleichrichters für eine Anordnung zur Winkelmessung,

Fig. 11  eine Mäanderspule mit besonderer Codierung der Mäanderschleifenbreite,

Fig. 12  ein Ersatzschaltbild für eine Meßanordnung einer Anordnung gemäß Fig. 11,

Fig. 13  eine Winkelsegmentaufteilung für eine Anordnung zur schnellen Segmenterkennung,

Fig. 14  den Zusammenhang zwischen variierter Schleifenbreite der Mäanderspule und der zugehörigen induzierten Spannung als Funktion des Ortes,

Fig. 15  eine erfindungsgemäße Anordnung zur Winkelmessung mit einem passiven rotierenden Geber bei einer geraden Anzahl von Meßspulen,

Fig. 16  die induzierten Spannungen bei einer Anordnung gemäß Fig. 15 bei einer geraden Anzahl von Meßspulen,

Fig. 17  eine erfindungsgemäße Anordnung zur Winkelmessung mit einem passiven rotierenden Geber mit einer ungeraden Anzahl von Meßspulen, und

Fig. 18  induzierte Spannungen bei einer Anordnung gemäß Fig. 17.

Im folgenden wird zunächst eine Anordnung zur Winkelmessung beschrieben. Es folgt dann die Erläuterung der Drehmomentmessung, der Datenübertragung zur Winkelpositionsbestimmung, der Signalaufbereitung und der Winkelmessung mit einem rotierenden Geber bei einer derartigen Anordnung.

**Winkelmessung**

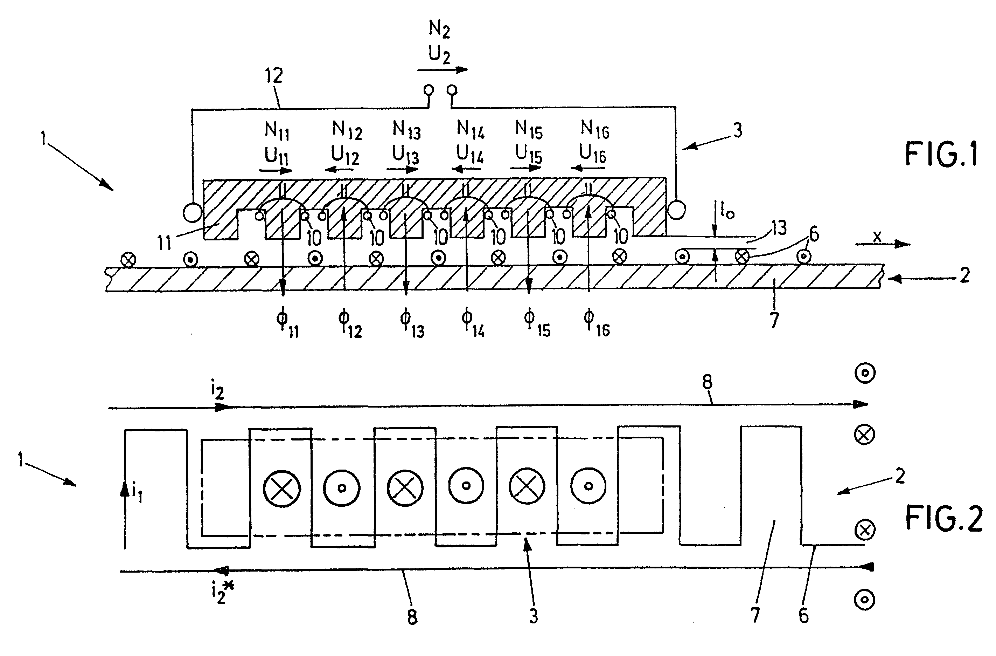

Eine Antennen-Transponder-Anordnung 1 weist gemäß Fig. 1 eine stationäre Antenneneinrichtung 2 und einen drehbar angeordneten Transponder 3 auf.

Derartige Antennen-Transponder-Anordnungen 1 werden zur Übertragung von Energie von der Antenneneinrichtung 2 zum rotierenden Transponder 3 und zur Bestimmung der relativen Position des Transponders 3 zur Antenneneinrichtung 2 verwendet.

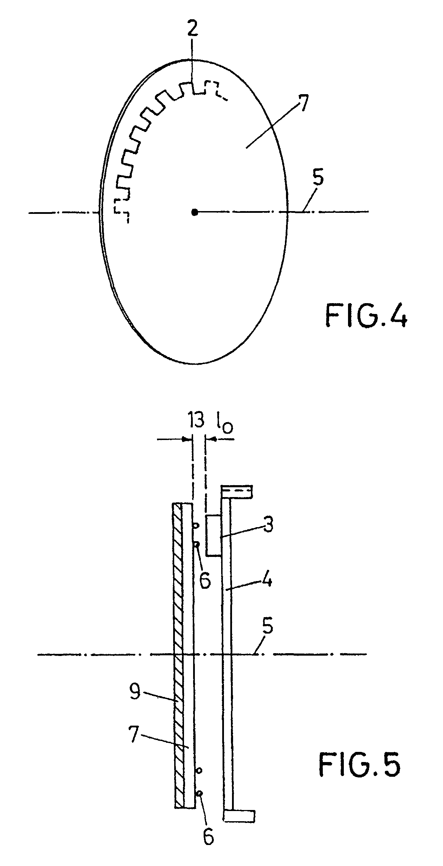

Der Transponder 3 ist, wie Fig. 5 zeigt, auf einer rotierenden Scheibe 4 angeordnet, die um einen Welle 5 drehbar gelagert ist. Mit der Antennen-Transponder-Anordnung 1 kann die Position der Welle 5 relativ zur stationären Antenneneinrichtung 2 vom Transponder 3 aus bestimmt werden.

Die stationäre Antenneneinrichtung 2 umfaßt eine Mäanderspule 6, die auf einer isolierenden Platte 7 befestigt ist.

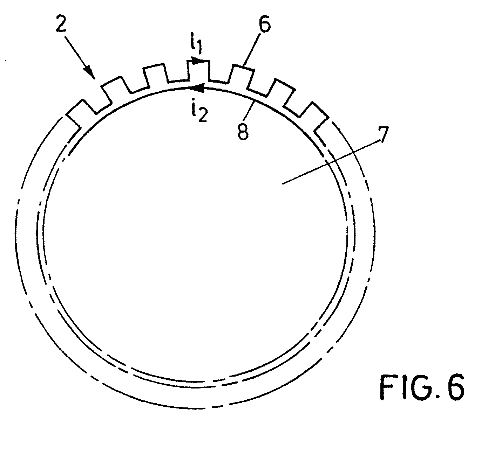

Die Mäanderspule 6 ist von mindestens einer, der Außen- oder Innenkontur folgenden glatten Spule 8, welche auch beidseitig ausgeführt sein kann, konzentrisch umgeben. Alle Teilspulen des stationären Teils sind auf der Platte 7 befestigt. Damit der resultierende Magnetfluß im Innern aller Spulen möglichst verschwindet, wählt man die Erregerströme in den Teilspulen umgekehrt proportional zum jeweiligen Radius. In Figur 2 sind zwei glatte Leitungen 8, 8* dargestellt und in Figur 6 ist eine einzige glatte Leitung 8 dargestellt.

Die Darstellungen in Fig. 1 und 2 betreffen lediglich einen Ausschnitt der Antenneneinrichtung 2, so daß dort die Krümmung der Gesamtanordnung nicht zu erkennen ist. In Fig. 4 ist in einer perspektivischen Darstellung ein Teil der Antenneneinrichtung 2 auf der Platte 7 dargestellt. Fig. 6 zeigt in axialer Sicht eine erfindungsgemäße Ausführung der stationären Antenneneinrichtung 2 mit einer Mäanderspule 6 und einer der Innenkontur folgenden, konzentrischen, glatten Spule 8.

Den gesamten Wirkungsgrad der Anordnung kann man dadurch verbessern, daß, wie Fig. 5 zeigt, auf der Rückseite der rotierenden Platte 7 der stationären Antenneneinrichtung eine magnetisch gut leitende Folie 9 aufgeklebt wird, die die Magnetfeldlinien auf dieser Seite der Antennen-Transponder-Anordnung 1 kurzschließt.

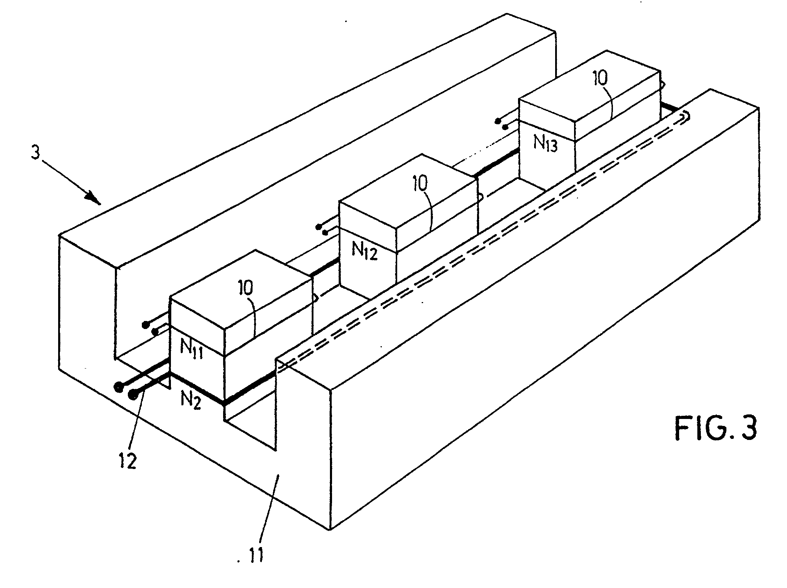

Der Transponder 3 weist in einer Reihe eine Anordnung von Spulen 10 auf, die derart hintereinander geschaltet sind, daß sich ihre induzierten Spannungen addieren (Fig. 1 und 3). Der Rotor, der den Transponder 3 aufweist, bezieht seine Energie aus dem Wechselmagnetfeld über eine Sekundärinduktivität in der, gemäß dem Induktionsgesetz, Spannung induziert wird. Um die Winkelposition des Rotors möglichst genau erfassen zu können, bildet man den Spulenteil, der zur Positionserfassung dient, und aus den Wicklungen $N_{11}$ ... $N_{1n}$ - im folgenden auch als Spulen 10 bezeichnet - besteht, für maximale Spannungsamplituden so aus, daß die Teilung mit der Teilung der mäanderförmigen Teilspule 6 des Stators übereinstimmt. Rotiert der Rotor, so entsteht in den Spulen eine induzierte Spannung, die amplitudenmoduliert ist, falls die Erregung durch die Statorspulen eine Wechselerregung ist, und eine stark von der Drehzahl abhängige, etwa sinusförmige Spannung ist, falls die Erregung durch die Statorspulen eine Gleicherregung ist.

Verwendet man zwei glatte Teilspulen 8 auf der Primärseite, so kann man eine Wicklung $N_2$ auf der Sekundärseite ( Rotoroder Transponderseite) verwenden. Diese dient dann wesentlich zur Energieübertragung. Wahlweise kann sie zusammen mit einer primärseitigen Mäanderspule 6 dazu verwendet werden, um eine Vergleichsspannung für die in den Spulen $N_{11}$ ... $N_{1n}$ induzierte Spannung bereitzustellen, die die Positionsmessung unabhängiger von variierenden Luftspalten macht.

Die Spulen sind auf einem feldführenden Ferrit 11 angeordnet, durch den die magnetischen Flüsse der Spulen $N_{11}$ bis $N_{16}$, nämlich $\phi_{11}$ bis $\phi_{16}$, geführt werden.

Die Anordnung der Spulen 10 ist von einer Gesamtspule 12 umgeben, die die Anordnung der Spulen 10 ein- oder mehrfach umfaßt. Die in der Gesamtspule 12, die auch mit $N_2$ bezeichnet wird, induzierte Spannung wird mit $U_2$ bezeichnet.

In einer bevorzugten Ausführungsform kann auch die Gesamtspule 12 in den feldführenden Ferrit 11 eingebettet werden, wie dies in Fig. 3 gezeigt ist. Auf diese Weise wird der magnetische Weg für die Gesamtspule 12 verbessert.

Zwischen der Antenneneinrichtung 2 und dem Transponder 3 befindet sich ein Luftspalt 13 der durchschnittlichen Breite $l_0$ (Fig. 1 und 5). Die Breite des Luftspalts 13 ist einerseits durch Fertigungstoleranzen und andererseits durch Umgebungseinflüsse im Betrieb von 1 mm bis 3 mm veränderlich. Diese Schwankungen gestalten die Positionsmessung als schwierig.

Beim Betrieb wird die Mäanderspule 6 durch einen Strom $i_1$ durchflossen (Fig. 6). In der glatten Leitung 8 fließt ein Strom $i_2$. Wäre lediglich die Mäanderspule 6 in der Anordnung gemäß Fig. 4 vorhanden, so würden Fluß, Induktivität, Strom und Spannung an der Spule durch die Windungszahl und die Gesamtfläche innerhalb des Mäanders bestimmt. Dasselbe würde für die Abstrahlung sowie die Einstrahlung von Störungen gelten.

Wird neben der Mäanderspule 6 eine glatte Spule 8 wie in Fig. 6 vorgesehen, und werden beide mit gleichphasigem Strom in der eingezeichneten Richtung durchflossen, und ist der Strom umgekehrt proportional zum mittleren Radius der beiden Spulen, so erzeugen die beiden Spulen in ihrer gemeinsamen Innenfläche jeweils ein gleich großes, aber entgegengesetztes Magnetfeld, wodurch der Gesamtfluß näherungsweise verschwindet. Dadurch erhält man pro Windung eine wesentlich geringere Induktivität, geringere Störeinstrahlung, geringere Abstrahlung und einen wesentlich besseren Kopplungsgrad zwischen Primär- und Sekundärseite der Anordnung. Der magnetische Fluß durch die Spulen ist der Erregung proportional, das heißt dem Produkt aus Windungszahl und Strom, solange sich keine magnetisch leitenden Materialien in der Umgebung befinden. Die in den Figuren dargestellten Kreise mit Punkten oder Kreuzen zeigen entweder die Stromflußrichtung oder die Richtung von Magnetfeldlinien senkrecht zur Zeichenebene aus dieser heraus oder in diese hinein.

Zusammengefaßt basiert das Verfahren zur Messung der Winkelposition, das unabhängig von Luftspaltänderungen arbeiten soll, auf folgendem. Wird der Transponder 3 vor der Antenneneinrichtung 2, die Strom durchflossen ist, parallel zu dieser bewegt, so werden in den Spulen 10 Spannungen $U_{11}$ bis $U_{16}$ induziert. Erfaßt man die Position des Transponders 3 und damit der Welle 5 durch die Messung der induzierten Spannungen $U_{11}$ bis $U_{16}$ mit einem Schmitt-Triger, so erhält man durch die Luftspaltänderungen eine Meßungenauigkeit, die sich störend auswirkt. Durch die Gesamtspule 12 wird im wesentlichen der Fluß gemessen, der durch den Strom $i_2$ in der glatten Spule 8 erzeugt wird. Die dadurch induzierte Spannung $U_2$ ist im selben Maß vom Luftspalt abhängig, wie die Spannungen $U_{11}$ bis $U_{16}$. Als $U_1$ wird die Summe der induzierten Spannungen $U_{11}$ bis $U_{16}$ bezeichnet, wobei die Spulen 10, wie oben erwähnt, derart hintereinander geschaltet sind, daß sich die Einzelspannungen addieren.

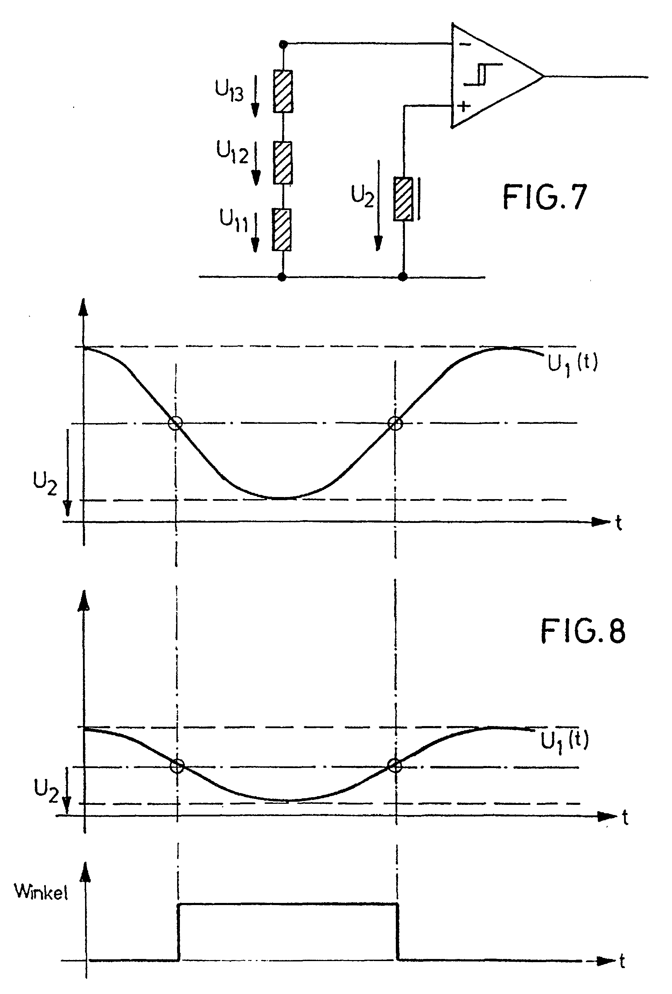

Setzt man die beiden so gewonnenen Spannungen $U_1$ und $U_2$ zueinander in einer Vergleichsschaltung (vgl. Fig.7) ins Verhältnis, so erhält man unabhängig vom Luftspalt immer die richtige Position vor der Mäanderspule 6. Die induzierte Spannung $U_2$ in der Gesamtspule 12 hängt von der Breite des Luftspaltes 13 und der Verschiebeposition des Transponders 3 relativ zur Antenneneinrichtung 2 ab. Die Verschiebeposition in Fig. 1 und 2 erfolgt in eine als x-Richtung bezeichnete Richtung.

Die Abhängigkeit des Flusses durch die sekundäre Gesamtspule 12 wird durch das Gesetz von Biot-Savart bestimmt und kann mit Hilfe der bekannten elliptischen Integrale berechnet werden, solange sich kein magnetisch leitendes Material in der Nähe der stromführenden Leitungen befindet. Wesentlich ist hier, daß sich das magnetische Feld in der Nähe einer kreisförmigen Spule stark nichtlinear verhält und mit der Entfernung von der Spule schnell abnimmt. Dieses Abnehmen der Feldstärke geht einher mit der dazu proportionalen Abnahme der induzierten Spannung $U_2$ in der Gesamtspule 12, wobei die Einflüsse des Innenwiderstands und anderer physikalischer Effekte hier außer Acht bleiben. Man befindet sich in einem Frequenzbereich, wo die kapazitiven Ströme im Feld und ohmsche Spannungsabfälle in den Leitungen vernachlässigt werden können.

Wenn nun die Position des beweglichen Teils, d. h. des Transponders 3, z. B. durch Messung der Nulldurchgänge der Amplitude der induzierten Spannung gemessen werden soll, so ist ein Meßinstrument zu benutzen, z. B. ein Schmitt-Triger mit einer festen Schwelle. Verändert sich nun die induzierte Spannung in ihrer Amplitude als Folge der Luftspaltänderung, so wertet dies das Meßinstrument als eine Änderung des Feldes und damit der induzierten Spannung aus und mißt eine falsche Wegstrecke. Dieses Problem wird erfindungsgemäß durch eine Vergleichsmessung in der vorgeschlagenen Weise gelöst.

Betrachtet man nur die Spitzenwerte der Spannungen oder nur die Effektivwerte der Spannungen oder die gleichgerichteten arithmetischen Mittelwerte der Spannungen, so gilt folgendes:

$$U_1(I_0, x) := f(i_1) \cdot f(\text{Geometrie}) \cdot f(I_0) \cdot f(x)$$

$$U_2(I_0) := f(i_2) \cdot f(\text{Geometrie}) \cdot f(I_0)$$

$$U := U_1(I_0,x) - U_2(I_0) = f(\text{Geometrie})\, f(I_0)\, [f(i_1)\, f(x) - f(i_2)]$$

Wählt man nun das Verhältnis der beiden Primärströme zueinander so, daß die Ungleichheiten eliminiert werden, so erhält man:

$$U = f(\text{Geometrie})\, f(I_0)\, f(i_1,i_2)\, [f(x) - 1].$$

Damit reduziert sich die Meßaufgabe darauf, Nulldurchgänge zu messen.

Zur weiteren Vereinfachung kann man von eingeprägten Strömen ausgehen. Dann braucht man auf der Primärseite, d. h. der Seite der Antenneneinrichtung 2, keine physikalische, glatte Rückleitung für den Strom $i_1$, sondern wählt den Strom $i_2{}^* := i_2 + i_1(\text{Rück})$. Dies ist in Fig. 2 dargestellt.

Wie bereits oben erwähnt und in Fig. 3 gezeigt, sieht eine weitere Ausbildung des bewegten Transponders 3 einen magnetischen Kurzschluß zur besseren Feldführung vor. Dadurch steht eine höhere induzierte Spannung pro Windung auf der Sekundärseite zur Verfügung.

Die Stellung der Spulen $N_{11}$ bis $N_{16}$ ist aufgrund der Wahl des gleichen Teilverhältnisses immer so, daß alle denselben Flußbetrag erhalten. Es gibt Stellungen mit maximalem Gesamtfluß und eine Stellung mit minimalen Gesamtfluß. Je nachdem, ob man die Anzahl der Wicklungen gerade und ungerade wählt, kann man mit einem schwellenden oder mit einem wechselnden Verhalten rechnen. In beiden Fällen bleibt das Prinzip des Vergleichs mit einer in gleicher Weise vom Luftspalt abhängigen Spannung erhalten.

In Fig. 7 ist schematisch eine Vergleichsschaltung dargestellt, mit der das Inverhältnissetzen der beiden Spannungen $U_1$ und $U_2$ möglich ist. Die Art des Inverhältnissetzens geht davon aus, daß üblicherweise Operationsverstärker mit zwei einander fast gleichen Eingängen, der eine invertierend, der andere nicht invertierend, zur Verfügung stehen. Fallweise kann auch, wie bereits oben erwähnt, ein Schmitt-Triger Verwendung finden. Eine Hysterese ist notwendig für die Stabilität der Schaltung. Sie verschlechtert allerdings die Meßgenauigkeit. Deshalb ist eine bessere Lösung in einer Hysterese gegeben, deren Wert proportional zu $U_2$ ist. Die richtige Position der Mäanderspule 6 wird dadurch wesentlich besser erfaßt, als würde man nur mit einer festen Vergleichsspannung arbeiten. Dann würde der Einfluß des Luftspaltes verbunden mit einer nichtlinearen Zu- oder Abnahme der zu vergleichenden Spannungen wesentlich weniger ins Gewicht fallen.

Gemäß Fig. 8, oberste Darstellung, ist die zeitliche Abhängigkeit der induzierten Spannung $U_1$ für eine kleine Spaltbreite $I_0$ gezeigt.

Die mittlere Darstellung in Fig. 8 zeigt die zeitliche Abhängigkeit der Spannung $U_1$ für einen größeren Luftspalt. Wie zu erkennen ist, ist die Amplitude von $U_1$ bei größerem Luftspalt kleiner. Dies ist durch den geringeren magnetischen Fluß bedingt, der die Spulen 10 durchdringt. Wird nun die Differenz der Spannungen $U_1$ und $U_2$ gebildet, so weist die Differenzspannung Nulldurchgänge auf, die zur Positionsbestimmung des Transponders 3 von Bedeutung sind.

Das Ausgangssignal der in Fig. 7 dargestellten Schaltung ist als unterster Graph in Fig. 8 gezeigt. Die Differenzspannung ist ein Maß für die Position des Transponders 3 relativ zur Antenneneinrichtung 2. Wenn sich der Transponder 3 vor der Antenneneinrichtung 2 um ein $\Delta x$ verschiebt, so ist dies ein Maß für die Winkeländerung der Scheibe 4 relativ zur Platte 7. Somit ist nach dem obigen Verfahren eine Messung der Wellenposition unabhängig von der Luftspaltbreite möglich.

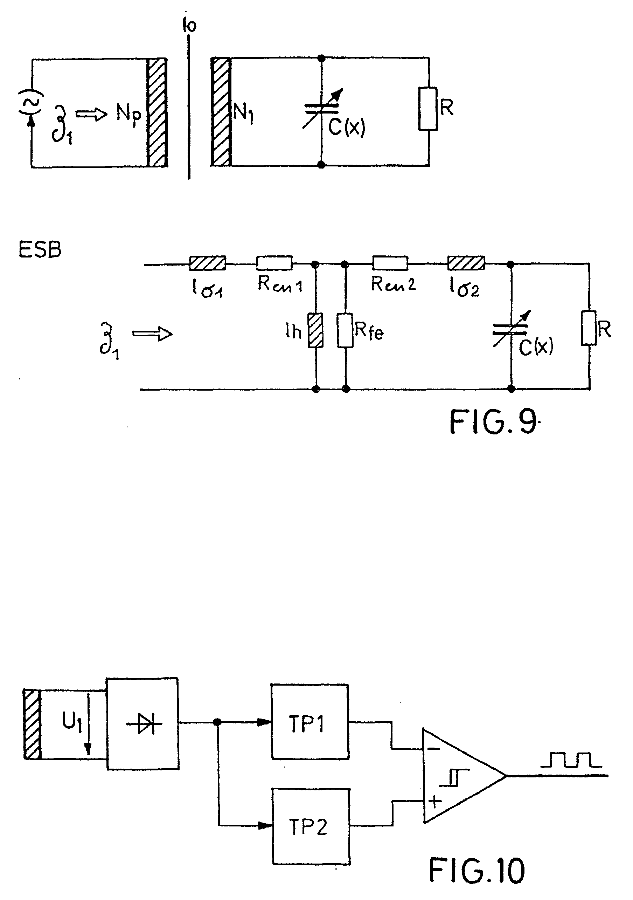

Ist die Spannung an den einzelnen Spulen $N_{11}$ bis $N_{16}$ genügend groß, so kann man auf die zweite Spule $N_2$, d. h. die Gesamtspule 12, verzichten, und die Vergleichsspannung dadurch gewinnen, daß man die Spannungen $U_{11}$ bis $U_{16}$ gleichrichtet und addiert und die damit gewonnene Spannung $U_2{}^*$ ins Verhältnis zur Spannung $U_1$ setzt. Das weitere Verfahren erfolgt dann wie oben beschrieben. Gleichrichter, insbesondere bei höheren Frequenzen, besitzen aufgrund physikalischer Gesetze eine Schwellenspannung, deren Auswirkung mit Hilfe von Operationsverstärkern verringert werden kann. Dies ist jedoch nicht vollkommen möglich. Sollte die Spannung einer einzelnen Spule 10 groß genug sein, z. B. wesentlich größer als die Schwellenspannung, so kann man, wie oben erwähnt, auf die Gesamtspule 12 verzichten, da durch die Gleichrichtung genau die Vergleichsspannung entsteht, die zum Betrieb des Systems benötigt wird. Allerdings ist dies auf ein System mit Vorspannungsverhalten beschränkt. Eine entsprechende Schaltungsanordnung ist in Fig. 10 gezeigt.

## Drehmomentmessung

Mit der erfindungsgemäßen Antennen-Transponder-Anordnung 1 können auch Meßdaten übertragen werden, die vom Transponder 3 erfaßt werden. Dies ist z. B. für das Drehmoment möglich, das auf der Welle 5 übertragen wird. Dazu wird die induzierte Spannung $U_2$ gleichgerichtet und als Energieversorgung verwendet, wobei ein Schwingkreis aufgebaut werden kann, um die Auswerteschaltung zu betreiben. Eine bekannte Methode ist in DE 39 22 556 C2 beschrieben.

Die Drehmomentmessung erfolgt bei diesem System durch die Messung einer Wegstrecke. Das aufgebrachte Drehmoment führt zur Deformation eines Sensorelements, wodurch zwischen vorgegebenen Punkten ein unterschiedlicher Abstand bzw. Wegstrecke entsteht.

Die Wegstrecke wird durch das Drehmoment erzeugt, das über die Welle 5 übertragen wird. Die Wegstrecke kann durch Dehnmeßstreifen (= DMS) gemessen werden. Dies kann jedoch auch durch einen Kondensator geschehen, dessen Platten zueinander verschoben werden. Wenn darüber hinaus die Meßgenauigkeit nicht allzu hoch sein muß, so ist folgende Vereinfachung möglich.

Der Winkel wird über die induzierte Spannung und das dadurch hervorgerufene sekundäre Magnetfeld in den Spulen $N_{11}$ bis $N_{16}$ gemessen. Dadurch fließt auf der Sekundärseite ein durch die induzierte Spannung und den Widerstand $R_2$ bestimmter Strom. Dieser läßt sich auf der Primärseite durch Rückwirkung messen. Das Drehmoment wird durch die Verstimmung der Resonanzfrequenz des auf der Sekundärseite vorhandenen Schwingkreises $N_2 + C$ bestimmt und wiederum durch Messung auf der Primärseite ermittelt.

Zusammengefaßt heißt dies, daß auf der Primärseite einerseits die Änderung des Realteils des von der Antenneneinrichtung 2 aufgenommenen Stroms gemessen werden muß und andererseits der Imaginärteil. Beide Größen können um einen bestimmten Phasenwinkel verschoben sein, der im wesentlichen vom Luftspalt 13 abhängt. Dazu müssen die Meßwerte durch Subtraktion in Beziehung zueinander gesetzt werden.

Ein Ersatzschaltbild für das obige Verfahren ist in Fig. 9 gezeigt. Dabei wird von einem großen Luftspalt ausgegangen. Um auf der Primärseite Strom und Spannung messen zu können, wird die Primärseite mit eingeprägtem Strom betrieben. Auf der Primärseite liegt ein passives Netzwerk vor, dessen einzelne Komponenten sowohl von der Winkelstellung (Antenneneinrichtung 2 relativ zum Transponder 3) als auch vom Drehmoment (Wert des Kondensators zur Wegmessung) abhängen. Dieses Netzwerk wird gemessen, mit einer Tabelle verglichen und daraus werden die Meßwerte für Winkelstellung und Drehmoment abgelesen.

In der Anordnung gemäß Fig. 5 ist die Platte 7, auf der die Antenneneinrichtung 2 angeordnet ist, mit einem Motor verbunden, der sich in Fig. 5 links von der Platte 7 befindet und nicht gezeigt ist. Mit der Scheibe 4 ist das Getriebe verbunden, das in Fig. 5, ebenfalls nicht gezeigt, rechts neben der Scheibe 4 angeordnet ist. Mit der Mäanderspule 6, die auf der Platte 7 befestigt ist, kann die Winkelstellung der Welle 5, z. B. der Kurbelwelle oder der Nockenwelle relativ zum Motorblock erfaßt werden.

## Datenübertragung zur Winkelpositionsbestimmung

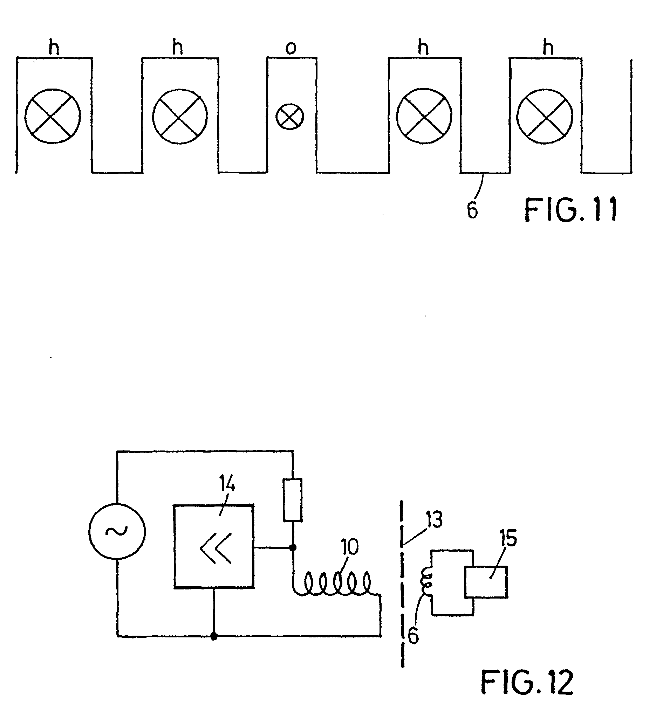

Zur Bestimmung der Winkelposition des Transponders 3 relativ zur Antenneneinrichtung 2 ist, wie in Fig. 11 gezeigt, bei der Mäanderspule 6 eine Mäandrierung mit verschiedenen Abständen zwischen den einzelnen Schleifen vorgesehen. Auf diese Weise wird bei der induzierten Spannung $U_1$ eine entsprechend geänderte Periodizität erzeugt. In Fig. 11 ist die Breite der Mäander der Mäanderspule 6 mit h und o bezeichnet. Auf der Seite des Transponders 3 kann die Winkelposition auf zweierlei Weise bestimmt werden. Die Grobposition wird über eine Decodierung der Signalfolge h und o bestimmt. Die Feinposition wird durch Abzählen der Nulldurchgänge festgestellt.

Gemäß Fig. 12 ist eine Meßanordnung als Ersatzschaltbild dargestellt, nach der die Winkelmessung nach obigen Verfahren möglich ist. Insbesondere gezeigt ist die getrennte Einspeisung der Energie in die Mäanderspule 6 und die Messung mit der zugehörigen Spule 10. Bemerkenswert ist die gemeinsame Verwendung der Spule 10 als Energiesender und als Meßempfänger zu der Mäanderspule 6. Gemäß Fig. 12 erfolgt die Messung durch eine Meßeinheit 14. Auf der Seite der Mäanderspule 6 ist ein Netzwerk 15 angeschlossen.

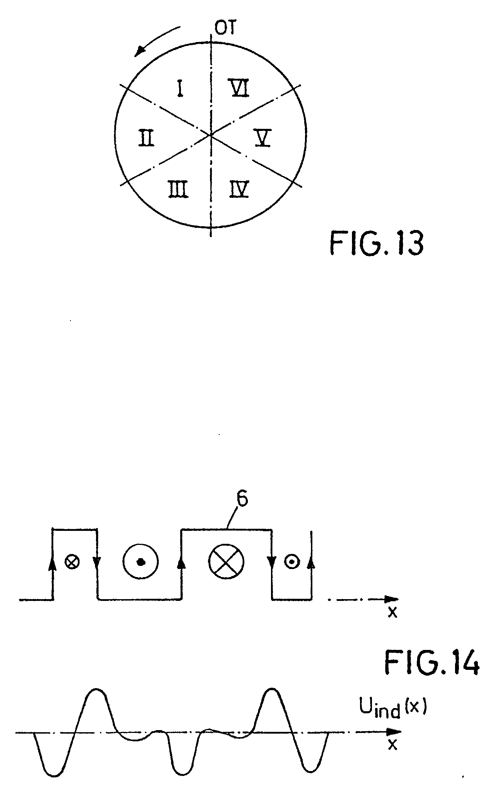

Die präzise Bestimmung der Winkelstellung der Kurbel- oder Nockenwelle 5 in Relation zu einem feststehenden Motorblock ist bedeutsam, um den oberen Totpunkt zu erkennen bzw. verschiedene Kurbelwellenwinkelbereiche voneinander unterscheiden zu können, ohne daß man nicht mindestens eine gesamte Umdrehung der Welle 5 abwarten muß, um beispielsweise den oberen Totpunkt zu erkennen. Wie bereits oben beschrieben, erfolgt die Bestimmung der Winkelposition durch eine Codierung der Abstände der Mäanderschleifen der Mäanderspule 6. Gemäß Fig. 13 ist eine Segmentierung verschiedener Winkelbereiche gezeigt. Sind z. B. 60 Zähne vorhanden, so können Winkelbereiche von je 6 ° gemessen werden. Die Messung erfolgt durch Bestimmung der Nulldurchgänge der induzierten Differnzspannung. Eine Codierung des Winkelbereichs entsteht dadurch, daß mehrere aufeinanderfolgende Zähne zu einem Codewort zusammengefaßt werden und dadurch schon nach Durchlauf von beispielsweise fünf Zähnen festgestellt werden kann, in welchem Winkelsegment von (5 / 60) * 360 ° sich der Transponder 3 relativ zur Antenneneinrichtung 2 befindet. Die Auswertung geschieht beispielsweise durch Zeitmessung nach dem Nulldurchgang bis zum inversen Nulldurchgang oder durch Abzählen mit einer zweiten konstanten Mäanderspur. Nun kann das Meßverfahren auch auf der Primärseite ausgeführt werden, indem man die rotierende Sensorspule kurzschließt oder mit einem beliebigen Netzwerk abschließt, so daß in der rotierenden Sensorspule ein Strom fließt. Dann kann auf der Primärseite die erforderliche Messung durchgeführt werden, denn dann ist der durch die Antennen-Transponder-Anordnung 1 erzeugte Lufttrafo sekundär kurzgeschlossen oder definiert abgeschlossen.

Verwendet man bei der Speisung der Primärseite einen Wechselstrom, z. B. mit 125 kHz, so ist das Verfahren auch für sehr niedrige Drehzahlen geeignet. Dann muß jedoch der Phasensprung beim Übergang von einem zum nächsten Zahn gemessen werden, oder ein Phasenvergleich zu einem konstanten Mäander durchgeführt werden.

Gemäß Fig. 14 ist der Zusammenhang zwischen einer codierten Folge von Mäanderschleifen der Mäanderspule 6 und der zugehörigen induzierten Spannung als Funktion des Ortes, d. h. x, gezeigt. Die Codierung durch Wahl veränderlicher Mäanderschleifenabstände setzt sich, wie in Fig. 14 gezeigt, in den Nulldurchgängen der induzierten Spannung fort. Aus diesen kann die Winkelposition bei Kenntnis der Codierung ermittelt werden.

## Aufbereitung des Signals des Winkelsensors

Die Winkelposition der Kurbelwelle und der Nockenwelle relativ zum Motorblock sollen möglichst genau erfaßt werden. Bei der Auswertung der Meßsignale treten systematische Fehler, wie Zentrierversatz, Abstandsschwankungen zwischen Sonde und Geber, Fertigungsstreuungen, thermisch bedingte Änderungen der mechanischen Abmessungen und der elektrischen Daten etc. auf. Ferner treten zufällige Meßfehler, wie Rauschen, Übertragungsfehler, Versorgungsspannungsschwankungen etc. auf.

Bei der Auswertung werden zwei unterschiedliche Betriebszustände berücksichtigt. Der erste Betriebszustand ist nach der Inbetriebnahme des Geräts vorhanden und stellt den Lernzustand des Gerätes dar. Der zweite Betriebszustand findet im Normalbetrieb statt, der gekennzeichnet ist durch die Möglichkeit der Adaption an die Alterung des die Welle 5 aufnehmenden Fahrzeugs.

Im folgenden wird zunächst der erste Betriebszustand, d. h. der Lernzustand, beschrieben. Aufeinanderfolgende relative Minima und relative Maxima des Winkelsignals werden als Bestimmungspunkte für die jeweilige Winkelstellung verwendet. Nimmt man in erster Nährung ein dreieckförmiges Sollsignal oder z. B. ein sinusförmiges Signal für die einzelnen Mäander an, und einen annähernd konstanten Ampitudenhub über eine Wellenumdrehung, so kann man hieraus in erster Nährung den Nulldurchgang des Mäanders berechnen und kommt so zu brauchbaren Ergebnissen für die Position der Kurbel- oder Nockenwelle. Die größten Ungenauigkeiten treten hierbei an den Stellen auf, wo die Mittellinie Umkehrpunkte besitzt. Die Mittellinie wird in einer Tabelle gespeichert und fortlaufend mit neueren Meßpunkten ausgemittelt. Die Mittellinie stellt dann nach einiger Zeit den systematischen Fehlerverlauf dar und ist als Funktion des Drehwinkels gespeichert.

Im zweiten Zustand, d. h. dem Zustand des Normalbetriebs, werden die Meßwerte für die Winkelstellung zur Mittellinie in Bezug gebracht, erstens durch Differenzbildung und zweitens durch Berücksichtigung von Drehzahl und/ oder Temperatur und/oder Fahrzeugalter etc. Dadurch ist es möglich, sehr genau den tatsächlichen Nulldurchgang des Signals zu ermitteln. Treten in diesem Zustand Abweichungen auf, die nicht zu erwarten waren, so kann von einer ganzen oder teilweisen Fehlfunktion ausgegangen werden.

## Winkelmessung mit einem passiven rotierenden Geber

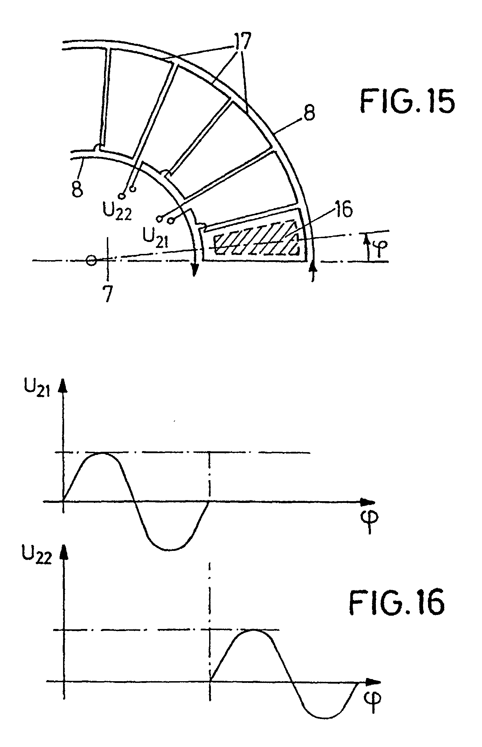

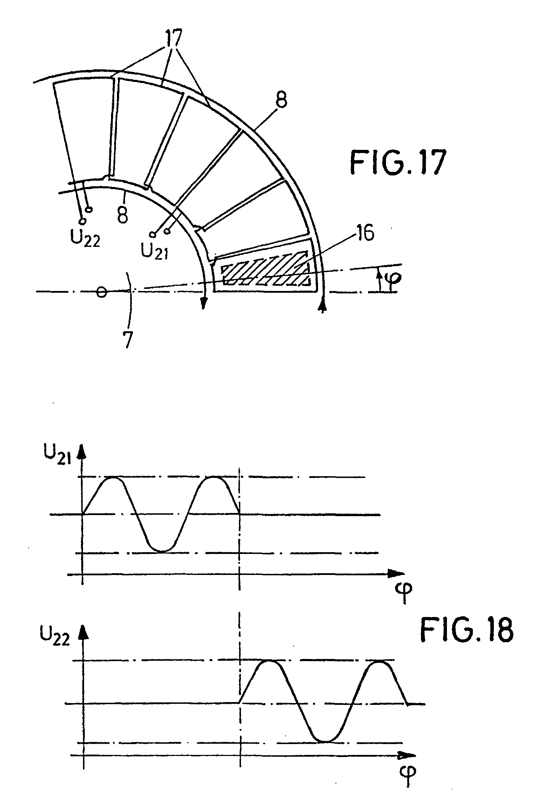

Die in den Fig. 15 und 17 gezeigte stationäre Meßvorrichtung umfaßt zwei glatte Primärspulen 8, um den primären Magnetfluß zu erzeugen. Als rotierendes, die Winkelposition erzeugendes Bauteil wird ein sich magnetisch anders als Luft verhaltendes Material verwendet, z. B. ein Ferritzahn 16. Die Energieübertragung zum Transponder 3 und die Datenübertragung vom Rotor, d. h. Transponder 3, zum Stator, d. h. Antenneneinrichtung 2, wird über die glatte und gleichförmige Primärspule 8 und den mit ihr verknüpften magnetischen Fluß abgewickelt. Die Winkelposition des Ferritzahns 16 wird über mehrere mäanderförmige Meßspulen 17, welche ebenfalls stationär innerhalb der konzentrischen Spulen 8 oder in deren unmittelbarer Nähe angeordnet sind, erfaßt.

Durch die Wahl der Anzahl der Unterteilungen, z. B. in 10*6 Mäanderspulen, kann die Modulation des Flusses entsprechend der gewünschten Genauigkeit und Einfachheit der Auswertung gewählt werden. Bei dem angeführten Zahlenverhältnis erhält man die sehr geeignete Modulation von 1 : 10.

Die Auswertung der Signale und die Aufbereitung für ein übergeordnetes Steuergerät erfolgt in einer Auswerteschaltung (in Fig. 15 und 17 nicht gezeigt) mit soviel Eingängen, wie Meßspulen 17 vorgesehen sind. Die Auswertung kann, wie oben ausgeführt, mit Hilfe einer Vergleichsschaltung erfolgen, wobei nun bei dieser Anordnung die auszuwertenden Eingangssignale sechsmal so groß wären.

Wie bereits oben ausgeführt, ist in Fig. 15 und 17 auf der Platte 7 eine innere und äußere glatte Spule 8 befestigt. Ferner sind zahlreiche mäanderförmige Meßspulen 17 vorgesehen. Darüber befindet sich getrennt durch den Luftspalt 13 ein drehbarer Ferritzahn 16.

Die Fig. 16 und 18 zeigen die induzierten Spannungen $U_{22}$ und $U_{21}$. Die Fig. 15 und 16 betreffen eine gerade Anzahl und die Fig. 17 und 18 eine ungerade Anzahl von Meßspulen 17.

Will man auch bei Stillstand des Sensors die Position erfassen, so wird die Primärspule mit einem Wechselstrom, z. B. mit einer Frequenz von 125 kHz, erregt. Muß lediglich die Position des bewegten Sensors erfaßt werden, so genügt die Erregung der Primärspule mit einem Gleichstrom oder die Ausbildung des Magnetfeldes mit einem Permanentmagneten anstelle des Ferritzahns 16.

Wie bereits oben ausgeführt, kann der magnetische Weg für den magnetischen Fluß dadurch verbessert werden, daß auf der Rückseite der rotierenden Platte 7 der stationären Antenneneinrichtung 2 eine magnetisch gut leitende Folie 9 aufgeklebt wird, die die Magnetfeldlinien auf dieser Seite kurzschließt. Desweiteren können Rotor und Stator in ihrer Funktion vertauscht werden.

Die Segmentierung der mäanderförmigen Meßspulen 17 kann auch überlappend erfolgen, je nachdem welche Auflösung des Winkelsignals erreicht werden soll. Es sind jedoch noch andere störende Einflüsse vorhanden, z. B. Gehäuseteile, die mitrotieren und eine elektrische und/oder magnetische Leitfähigkeit haben. Um diese störenden Einflüsse zu minimieren, läßt man auf der diametralen Seite ein entsprechendes, ebenfalls rein passives Bauteil mitrotieren, das nur die störenden Einflüsse repräsentiert. In der Auswerteschaltung bildet man dann immer die Signaldifferenz der gegenüberliegenden Mäandersegmente.

Bezugszeichenliste

| | |
|---|---|
| 1 | Antennen-Transponder-Anordnung |
| 2 | Antenneneinrichtung |
| 3 | Transponder |
| 4 | Scheibe |
| 5 | Welle |
| 6 | Mäanderspule |
| 7 | Platte |
| 8 | glatte Spule |
| 9 | Folie |
| 10 | Spule |
| 11 | Ferrit |
| 12 | Gesamtspule |
| 13 | Luftspalt |
| 14 | Meßeinheit |
| 15 | Netzwerk |
| 16 | Ferritzahn |
| 17 | Meßspulen |

**Patentansprüche**

1. Antennen-Transponder-Anordnung (1) zur Winkelmessung und Datenübertragung mit

- einer stationären Antenneneinrichtung (2), die mindestens zwei konzentrische Spulen (6, 8) mit verschiedenen mittleren Radien aufweist, wobei mindestens eine der konzentrischen Spulen (6, 8) als Mäanderspule (6) ausgeführt ist und sich der mittlere Fluß im Inneren der Spulen näherungsweise gegenseitig aufhebt,
- einem Transponder (3), der auf einem rotierenden Teil (4) angeordnet ist,

wobei die Anordnung (1) zwischen der Antenneneinrichtung (2) und dem Transponder (3) einen Luftspalt (13) aufweist.

**2.** Antennen-Transponder-Anordnung (1) gemäß Anspruch 1, **dadurch gekennzeichnet, daß** der Transponder (3) Meßdaten eines auf einer drehbar gelagerten Welle (5), mit der der Transponder (3) verbunden ist, übertragenen Drehmoments von einem Drehmomentsensor erfaßt und an die Antenneneinrichtung (2) überträgt.

**3.** Antennen-Transponder-Anordnung (1) gemäß einem der Ansprüche 1 oder 2, **dadurch gekennzeichnet, daß** zur Energieversorgung einer mit dem Transponder (3) elektrisch leitend verbundenen Auswerteschaltung, die die Daten des Drehmomentsensors auswertet, die durch die Gesamtspule (12) induzierte Spannung gleichgerichtet und auf die Auswerteschaltung gegeben wird.

**4.** Antennen-Transponder-Anordnung (1) gemäß Anspruch 2 oder 3, **dadurch gekennzeichnet, daß** eine erste Meßgröße (Position) als ohmscher Anteil und eine zweite Meßgröße (Drehmoment) als kapazitiver Anteil vom Transponder (3) auf die stationäre Antenneneinrichtung (2) übertragen wird.

**5.** Antennen-Transponder-Anordnung (1) nach einem der vorhergehenden Ansprüche, **dadurch gekennzeichnet, daß** zur Adaption eines gemessenen Winkelpositionssignals an mögliche Fertigungsungenauigkeiten ein erster Betriebszustand, der nach der Inbetriebnahme des Geräts vorhanden ist und den Lernzustand des Gerätes darstellt, und ein zweiter Betriebszustand, der dem Normalbetrieb entspricht, vergleichend berücksichtigt werden.

## Claims

**1.** Antenna transponder arrangement (1) for angular measurement and data transfer with

- a stationary antenna apparatus (2) which has at least two concentric coils (6, 8) with different mean radii, whereby at least one of the concentric coils (6, 8) is formed as a meander coil (6) and the average flux in the interior of the coils approximately cancels itself out,

- a transponder (3) arranged on a rotating part (4),

whereby the arrangement (1) has an air gap (13) between the antenna apparatus (2) and the transponder (3).

**2.** Antenna transponder arrangement (1) according to Claim 1, **characterised in that** the transponder (3) records measured data of a transferred torque from a torque sensor, said torque being on a swivel-mounted shaft (5) to which the transponder (3) is connected, and transfers it to the antenna apparatus (2).

**3.** Antenna transponder arrangement (1) according to one of Claims 1 or 2, **characterised in that** for the power supply of an evaluation circuit which is connected in electrically conductive fashion to the transponder (3) and which evaluates the data of the torque sensor, the voltage induced by the total coil (12) is rectified and passed to the evaluation circuit.

**4.** Antenna transponder arrangement (1) according to Claim 2 or 3, **characterised in that** a first measured variable (position) is transferred as a resistive component and a second measured variable (torque) as a capacitive component from the transponder (3) to the stationary antenna apparatus (2).

**5.** Antenna transponder arrangement (1) according to one of the preceding claims, **characterised in that** for adaptation of a measured angular position signal to possible manufacturing inaccuracies a first operating state, which is present following start-up of the device and represents the learning state of the device, and a second operating state corresponding to normal operation, are taken into account comparatively.

## Revendications

**1.** Dispositif antenne-transpondeur (1) pour la mesure angulaire et la transmission de données, comprenant

- un dispositif d'antenne fixe (2) qui présente au moins deux bobines concentriques (6, 8) possédant des rayons moyens différents, au moins une des bobines concentriques (6, 8) étant réalisée sous la forme d'une bobine à méandres (6) et le flux moyen à l'intérieur des bobines s'annulant mutuellement approximativement,

- un transpondeur (3) qui est disposé sur une partie rotative (4),

dans lequel le dispositif (1) comprend un entrefer (13) entre le dispositif d'antenne (2) et le transpondeur (3).

2. Dispositif antenne-transpondeur (1) selon la revendication 1, **caractérisé en ce que** le transpondeur (3) capte des données de mesure d'un couple d'un détecteur de couple qui est transmis sur un arbre (5) monté rotatif auquel le transpondeur (3) est relié, et les transmet au dispositif d'antenne (2).

3. Dispositif antenne-transpondeur (1) selon l'une des revendications 1 ou 2, **caractérisé en ce que**, pour l'alimentation en énergie d'un circuit d'analyse connecté électriquement au transpondeur (3), qui analyse les données du capteur de couple, la tension induite à travers la bobine globale (12) est redressée et est fournie au circuit d'analyse.

4. Dispositif antenne-transpondeur (1) selon la revendication 2 ou 3, **caractérisé en ce qu'**une première grandeur de mesure (position) en tant que partie ohmique, et une deuxième grandeur de mesure (couple) en tant que partie capacitive, sont transmises du transpondeur (3) au dispositif d'antenne fixe (2)

5. Dispositif antenne-transpondeur (1) selon l'une des revendications précédentes, **caractérisé en ce que**, pour l'adaptation d'un signal de position angulaire mesuré à des imprécisions de fabrication possibles, on prend en compte et on compare un premier état de fonctionnement qui est présent après la mise en service de l'appareil et qui représente l'état d'apprentissage de l'appareil, et un deuxième état de fonctionnement qui correspond au fonctionnement normal.

EP 1 071 928 B1

$N_2$

$U_2$ →

12

$N_{11}$    $N_{12}$    $N_{13}$    $N_{14}$    $N_{15}$    $N_{16}$

$U_{11}$ →  $U_{12}$ ←  $U_{13}$ →  $U_{14}$ ←  $U_{15}$ →  $U_{16}$ ←

1

3

**FIG.1**

11

10   10   10   10   10   10

$I_o$

13

6

x →

2

7

$\phi_{11}$    $\phi_{12}$    $\phi_{13}$    $\phi_{14}$    $\phi_{15}$    $\phi_{16}$

$i_2$ →      8

⊙

⊗

1

$i_1$

2

⊗

**FIG.2**

$i_2^*$

8

3

7

6

⊙

FIG.3

EP 1 071 928 B1

FIG.4

FIG.5

FIG.6

$U_{13}$

$U_{12}$

$U_{11}$

$U_2$

FIG.7

$U_1(t)$

$U_2$

t

FIG.8

$U_1(t)$

$U_2$

t

Winkel

t

FIG.9

FIG.10

EP 1 071 928 B1

FIG.11

FIG.12

17

FIG.13

FIG.14

$U_{ind}(x)$

FIG.15

FIG.16

FIG.17

FIG.18